(19) **Europäisches Patentamt / European Patent Office / Office européen des brevets**

(11) **EP 4 269 296 B1**

(12) **EUROPEAN PATENT SPECIFICATION**

(45) Date of publication and mention
of the grant of the patent:
**23.07.2025 Bulletin 2025/30**

(21) Application number: **21910012.0**

(22) Date of filing: **10.11.2021**

(51) International Patent Classification (IPC):
**B65G 54/02** *(2006.01)* **G01N 35/00** *(2006.01)*
**G01N 35/02** *(2006.01)* **G01N 35/04** *(2006.01)*

(52) Cooperative Patent Classification (CPC):
**B65G 54/02; G01N 35/04;** G01N 2035/0406;
G01N 2035/0477

(86) International application number:
**PCT/JP2021/041311**

(87) International publication number:
**WO 2022/137858 (30.06.2022 Gazette 2022/26)**

(54) **SPECIMEN TRANSPORTATION DEVICE**

PROBENTRANSPORTVORRICHTUNG

DISPOSITIF DE TRANSPORT DE SPÉCIMEN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2020 JP 2020214474**

(43) Date of publication of application:
**01.11.2023 Bulletin 2023/44**

(73) Proprietor: **HITACHI HIGH-TECH CORPORATION
Tokyo 105-6409 (JP)**

(72) Inventors:
• **KOBAYASHI Hiroyuki
Tokyo 100-8280 (JP)**
• **KANEKO Satoru
Tokyo 100-8280 (JP)**
• **SUZUKI Takahiro
Tokyo 100-8280 (JP)**

• **AOYAMA Yasuaki
Tokyo 100-8280 (JP)**
• **HOSHI Ryosuke
Tokyo 100-8280 (JP)**
• **WATANABE Hiroshi
Tokyo 105-6409 (JP)**
• **AZUMA Shinji
Tokyo 105-6409 (JP)**

(74) Representative: **Strehl & Partner mbB
Maximilianstrasse 54
80538 München (DE)**

(56) References cited:
JP-A- 2000 275 251    JP-A- 2014 532 870
JP-A- 2017 053 850    JP-A- 2017 077 971
JP-A- 2017 522 564    JP-A- 2020 142 913
JP-A- S61 217 434    JP-U- 3 120 179
US-A1- 2016 077 120

**Description**

Technical Field

The present invention relates to a specimen transportation device suitable for a specimen analysis system that analyzes a biological sample (hereinafter referred to as specimen) such as blood or urine and a specimen pretreatment apparatus that performs pretreatment necessary for analysis.

Background Art

In the specimen processing devices for clinical examination, indicated analytical items are examined for specimens (samples) such as blood, plasma, serum, urine, and other body fluids. The sample processing devices are capable of automatically processing each step by connecting a plurality of devices having each function. That is, to streamline operations of an examination room, analysis units for a plurality of analysis fields such as biochemistry and immunology are connected by transportation lines and operated as a single device. In a transportation line of the related art, a belt drive system is mainly used, and when transportation is stopped due to some kind of abnormality during transportation, the specimen cannot be supplied to the device on the downstream side thereof. Due to the advancement of medical care and the progress of an aging society, diversification of sample processing contents and an increase in the number of specimens are expected, and it is necessary to transport various specimens more quickly.

Therefore, to improve processing capability of the specimen processing device, an electromagnetic transportation method is being studied to realize high-velocity transportation of specimens, simultaneous transportation of a large amount of specimens, and transportation in a plurality of directions.

As an example of the electromagnetic transportation method, there is a laboratory sample distribution system described in JP2017-227635A (PTL 1). The laboratory sample distribution system includes a plurality of sample container transporting bodies, which include magnetically active elements in the form of permanent magnets. With such configuration, in the laboratory sample distribution system of PTL 1, a magnetic field generated by an electromagnetic actuator drives the sample container transporting body across a transportation surface. In the laboratory sample distribution system of PTL 1, a magnetic field generated by a permanent magnet is detected by a position sensor and feedback on the position of the sample container transporting body can be received (see paragraphs [0063]-[0065]).

Citation List

Patent Literature

PTL 1: JP2017-227635A
JP 2017 077971 A discloses a specimen transportation device in a laboratory sample distribution system with the features in the pre-characterizing portion of Claim 1. A further related specimen transportation device is disclosed in JP 2020 142913 A.

Summary of Invention

Technical Problem

The laboratory sample distribution system of PTL 1 discloses a technique of detecting a sample position by the position sensor and transporting the sample container transporting body, but does not describe the movement or stopping method of the sample container transporting body.

In the electromagnetic actuator, current is applied to a coil, and effective thrust generated in the coil is used to transport the specimen. Here, when an amount of current applied to the coil and a switching position of the coil to which the current is applied are not appropriately controlled, fluctuations in a transportation velocity of the specimen that occur immediately after switching become large and large liquid shaking is generated. Since the coil has detent force (force acting on the opposite side to a traveling direction) at nearly directly above, the sample container transporting body cannot be stopped at a targeted stopping position unless the coil current is controlled considering the detent force.

An object of the present invention is to provide a specimen transportation device capable of controlling a specimen stopping position with high precision while preventing liquid shaking during specimen transportation.

Solution to Problem

To achieve the objective described above, the present invention suggests the specimen transportation device defined in Claim 1. Further advantageous features are set out in the dependent claims.

Advantageous Effects of Invention

According to the present invention, liquid shaking during transportation can be prevented and a specimen stopping position can be controlled with high precision.

Problems, configurations, and effects other than those described above will be clarified by the following description of the embodiments.

Brief Description of Drawings

[Fig. 1] Fig. 1 is a schematic configuration diagram of a specimen transportation device 1 according to an embodiment of the present invention.

[Fig. 2] Fig. 2 is a schematic diagram illustrating a part of a cross-sectional configuration example of the specimen transportation device 1.

[Fig. 3] Fig. 3 is a functional block diagram illustrating a configuration of a computation unit 40 of the specimen transportation device 1.

[Fig. 4] Fig. 4 is a diagram illustrating inductance characteristics with respect to a position of a coil 25 used in the specimen transportation device 1.

[Fig. 5] Fig. 5 is a diagram illustrating current change amount characteristics with respect to the position of the coil 25.

[Fig. 6] Fig. 6 is a diagram illustrating time-series waveforms of voltage pulses and currents of the specimen transportation device 1.

[Fig. 7] Fig. 7 is a diagram illustrating position versus effective thrust for each current of the specimen transportation device 1.

[Fig. 8] Fig. 8 is a diagram for describing an influence of a switching position of an excitation coil of the specimen transportation device 1 on a specimen transportation velocity.

[Fig. 9] Fig. 9 is an explanatory diagram of velocity fluctuation accompanying switching of the excitation coil of the specimen transportation device 1.

[Fig. 10] Fig. 10 is a diagram for describing the influence of the switching position of the excitation coil of the specimen transportation device 1 on velocity fluctuation.

[Fig. 11] Fig. 11 is an explanatory diagram of the transportation velocity at the second current application timing of the specimen transportation device 1.

[Fig. 12] Fig. 12 is an explanatory diagram of effective thrust and specimen operation of the specimen transportation device 1 when a first current/second current is applied.

Description of Embodiments

In the sample transportation device, it is necessary to prevent liquid shaking during transportation in order not to affect an analysis result. Since a plurality of specimens are transported, it is necessary to control a stopping position of the specimen (transportation container) with high precision to prevent collision with other specimens. In an electromagnetic transportation device, current is applied to a coil so that the specimen can be transported in a desired direction, and the specimen is transported using effective thrust generated in the coil. Here, to move the specimen to a target position, it is necessary to apply the current to a plurality of coils according to a position of the specimen, but the effective thrust generated in the specimen is determined by a coil current amount, electromagnetic force (traveling direction/vertical direction) determined by a positional relationship between the coil and specimen, and frictional force ($\mu N$) obtained from a coefficient of friction between the mass of specimen and the transportation surface. That is, unless the amount of current applied to the coil and the switching position of the coil to which the current is applied are controlled, fluctuations in the transportation velocity of the specimen that occur immediately after switching become large, and liquid shaking occurs. Since the coil has detent force (force acting on the opposite to the traveling direction) at nearly directly above, the specimen cannot be stopped at the targeted stopping position unless the coil current is controlled considering the detent force.

The present embodiment has been made to solve the problems described above, and estimates the position of the specimen from information on the current flowing through a coil winding, thereby estimating the position of the specimen without using a sensor for detecting the position of the specimen. By detecting a current change amount accompanying the change in the inductance of the coil, which changes depending on the position of the specimen, accurate positional information of the specimen is grasped, and the position detection accuracy of the specimen is improved. The example includes a liquid shaking determiner, predicts velocity fluctuation from velocity information of the coil to which the current is applied, and controls the amount of current for preventing the liquid shaking and the switching position of the coil to which the current is applied. To accurately control the stopping position, the effective thrust for overcoming the detent force of the coil is computed, and based on the computation result, the amount of current and the switching position of the coil to which the current is applied are controlled.

According to the present embodiment, it is possible to prevent liquid shaking during transportation while maintaining transportation efficiency, and to control the specimen stopping position with high precision.

Embodiments of the specimen transportation device of the present invention will be described below with reference to the drawings.

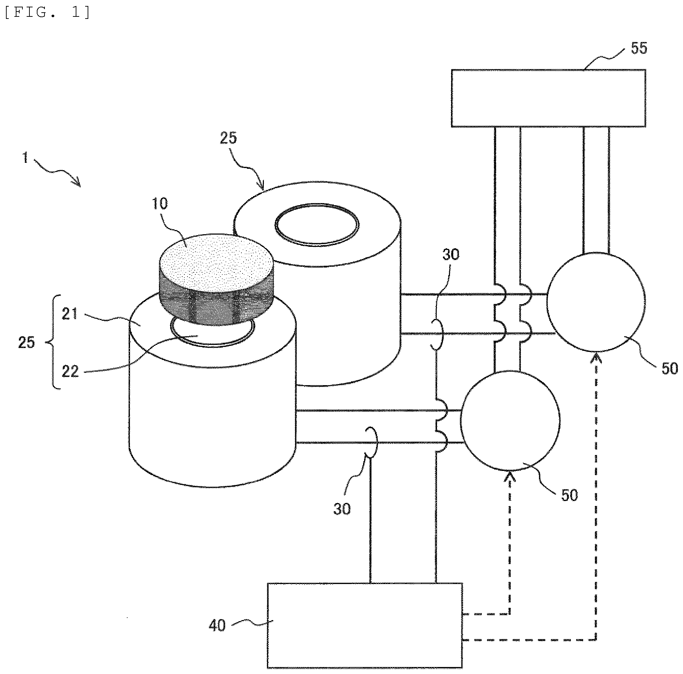

First, the schematic configuration of the transportation device of this embodiment will be described with reference to Fig. 1. Fig. 1 is a schematic configuration diagram of the specimen transportation device 1 according to an embodiment of the present invention. Fig. 1 schematically illustrates an outline of the specimen transportation device 1 in which two coils 25 and a permanent magnet 10 are relatively operated.

In Fig. 1, the specimen transportation device 1 includes the permanent magnet 10, the coil (coil device) 25 composed of a cylindrical core 22 and a winding 21 wound around the outer circumference of the core 22, a drive circuit 50, a current detection unit 30, a computation unit 40 and a power source 55.

The permanent magnet 10 can also be made of a magnetic material, and the drive circuit 50 configures a coil drive unit. The coil drive unit may be configured to include the current detection unit 30. The computation unit 40 configures a control unit of the specimen transportation device 1 and controls the coil drive unit to transport a transportation container (specimen holder) 20 holding the specimen.

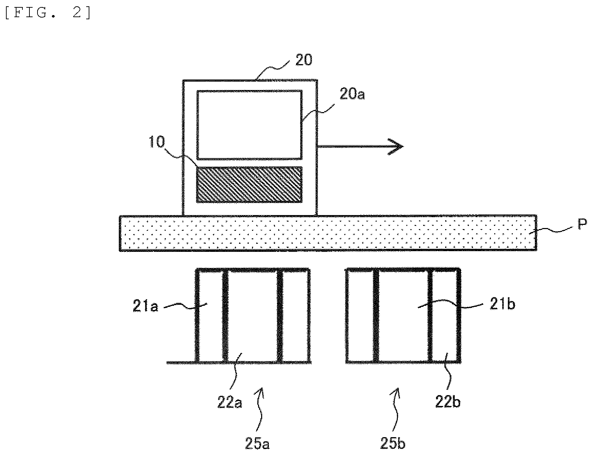

Fig. 2 is a schematic diagram illustrating a part of a cross-sectional configuration example of the specimen transportation device 1. The transportation container 20 is configured such that a holding unit 20a of the specimen (container) and the permanent magnet 10 are integrated. The transportation container 20 is disposed to face the coil 25 (25a, 25b) with a transportation surface P therebetween.

Normally, the specimen transportation device 1 causes electromagnetic force to be generated in the core 22 by making current flow through coils 21a and 21b of the coils 25a and 25b. By the electromagnetic force, the permanent magnet 10 disposed in the transportation container 20 is controlled to move relative to the coils 25a and 25b by being allowed to slide above between the plurality of coils 25a and 25b (between the coil 25 and coil 25) and on the transportation surface P, and the transportation container 20 is transported to a desired position.

In the specimen transportation device 1, relative positional information between the permanent magnet 10 and coils 25a and 25b is required. The positional information is used to efficiently cause the electromagnetic force generated in the cores 22a and 22b to act on the permanent magnet 10 by making the current to flow through windings 21a and 21b of the coils 25a and 25b, and is also used to move the permanent magnet 10 in a targeted direction.

For example, it is assumed that the permanent magnet 10 is above (directly above) one of the two coils 25. Even when voltage is applied to the coil 25a (winding 21a) directly below the permanent magnet 10, no force is generated in the transporting direction (thrust) in the permanent magnet 10. On the other hand, when voltage is applied to the coil 25b (winding 21b) (not directly below the permanent magnet 10) without the permanent magnet 10 above (directly above), force that attracts the permanent magnet 10 to the coil 25b is generated, and force (thrust) in the transporting direction is generated. That is, by applying voltage to the desired coils 25a and 25b (windings 21a and 21b), it is possible to efficiently generate force in the transporting direction in the permanent magnet 10. By selecting the coils 25a and 25b (windings 21a and 21b) to which the voltage is applied, the orientation (direction) of force in the transporting direction can be controlled.

Subsequently, a method for estimating the specimen position without using a position sensor will be described. When the permanent magnet 10 is above the coil 25 on the near side in Fig. 1, the magnetic flux produced by the permanent magnet 10 acts on the coil 25. Here, the magnitude of acting magnetic flux differs between the coil 25 closer to the permanent magnet 10 and the coil 25 farther from the permanent magnet 10. That is, the magnitude of the magnetic flux acting on the coil 25 changes depending on a relative position between the permanent magnet 10 and the coil 25.

The core 22 is made of a magnetic substance, and the magnetic flux passing through the core 22 has a property that it becomes difficult to pass when the magnetic flux becomes large. Here, when voltage is applied to the winding 21 to cause current to flow, magnetic flux produced by the current is generated in the core 22. Therefore, in the core 22, the magnetic flux produced by the permanent magnet 10 and the magnetic flux produced by the current flowing through the winding 21 are generated.

Generally, when current flows through the winding 21, a magnetic field is generated around the winding 21, and generated magnetic flux is proportional to the flown current value. The proportional constant is called inductance. However, in a circuit having a magnetic substance such as the core 22, the inductance changes due to saturation characteristics of the core 22.

When the saturation in the core 22 occurs, the inductance changes depending on the magnitude of the magnetic flux generated in the core 22. That is, the inductance of the winding 21 changes depending on the magnitude of the magnetic flux of the permanent magnet 10. The inductance of the winding 21 changes depending on the position of the permanent magnet 10.

Voltage V generated in the winding 21 is represented by Equation (1).

$$V = -d\varphi/dt \quad (1)$$

$\varphi$ is magnetic flux and t is time. As shown in Equation (1), the voltage V is represented by the amount of change in magnetic flux per unit time.

When the current is I and the inductance is L, the relationship of Equation (2) is established.

$$dI/dt = (1/L)*(d\varphi/dt) \quad (2)$$

From Equations (1) and (2), the relationship of Equation (3) is established.

$$dI/dt = -V/L \quad (3)$$

That is, when constant voltage is applied to the winding 21, the time differential of the supplied current I changes depending on the magnitude of the inductance L, as shown in Equation (3). The supplied current rises differently when the voltage is applied.

Accordingly, when voltage is applied to the winding 21, the inductance L can be obtained by computation, by detecting the current flowing through the winding 21 and how the current flows. That is, when the inductance L of the winding 21 that changes depending on the position of the permanent magnet 10 is detected, the position of the permanent magnet 10 that affects the inductance L is obtained.

Therefore, the drive circuit 50 is connected to the winding 21 of the coil 25 and the current detection unit 30 for detecting the value of the current flowing through the winding 21 is provided. In the present embodiment, the drive circuit 50 applies voltage to the winding 21 and the current detection unit 30 detects the current value generated by the voltage.

The current detection unit 30 is considered to be a series resistor, a current transformer, or a Hall current sensor, but is not limited thereto.

The drive circuit 50 is connected to the power source 55, receives current, and supplies the current to the winding 21 of the coil 25.

The computation unit 40 computes a voltage command to be applied to the drive circuit 50 to obtain the thrust required to transport the transportation container 20, measures the inductance L (that is, current change amount dI/dt) of the coil 25 based on the current value detected by the current detection unit 30, computes the relative positional relationship between the coil 25 and the permanent magnet 10, and estimates the position of the permanent magnet 10. The computation unit 40 uses the computed positional information of the permanent magnet 10 (specimen) to determine the timing when the current necessary for transporting the permanent magnet 10 is supplied to the coil 25, and causes the current to be supplied from the drive circuit 50 to an appropriate coil 25.

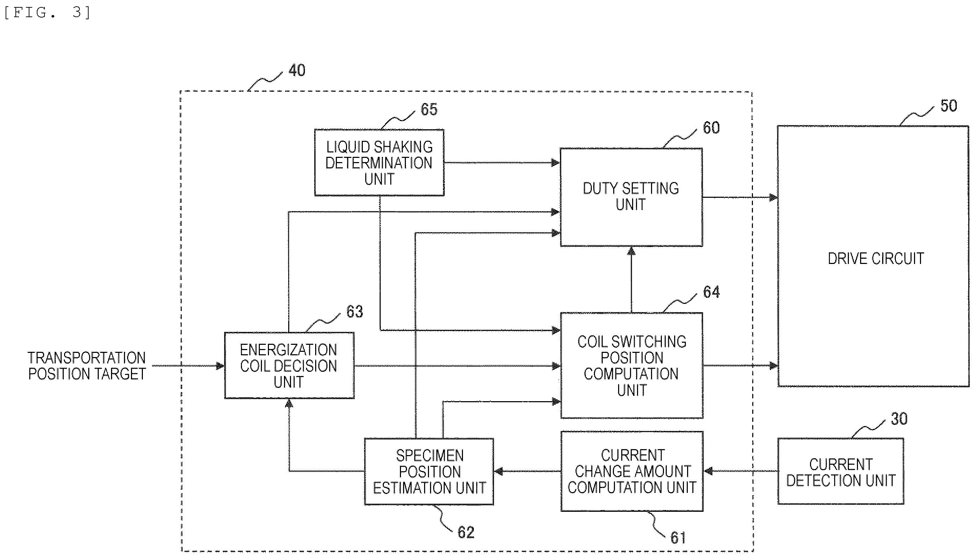

An example of specimen position detection control here is shown in the block diagram of Fig. 3. Fig. 3 is a functional block diagram illustrating the configuration of the computation unit 40 of the specimen transportation device 1.

As shown in Fig. 3, the computation unit 40 receives an order determined by an energization coil determination unit 63, a thrust (current) command determined by a target value of the transportation velocity computed by a liquid shaking determination unit 65, a target switching position command output by the liquid shaking determination unit 65, and positional information output by a specimen position estimation unit 62, and a duty setting unit 60 computes voltage pulse and outputs the voltage pulse to the drive circuit 50.

The duty setting unit 60 computes ON time and OFF time of the voltage pulse based on the thrust (current) command computed by the liquid shaking determination unit 65, and determines a duty ratio of the voltage pulse.

The current detection unit 30 detects the current value when the voltage pulse is output to the coil 25, a current change amount computation unit 61 computes the current change amount (dI/dt) of the coil 25, and the specimen position estimation unit 62 estimates the specimen position according to the computed value. The energization coil determination unit 63 determines the coil 25 to be actually energized based on the target transportation position of the specimen and the specimen position estimation result described above, and, according to the determined position and the target switching position command output by the liquid shaking determination unit described above, a coil switching position computation unit 64 switches the circuit so that the desired coil 25 can be energized.

The control block described here can be realized by a computation device such as a microcomputer.

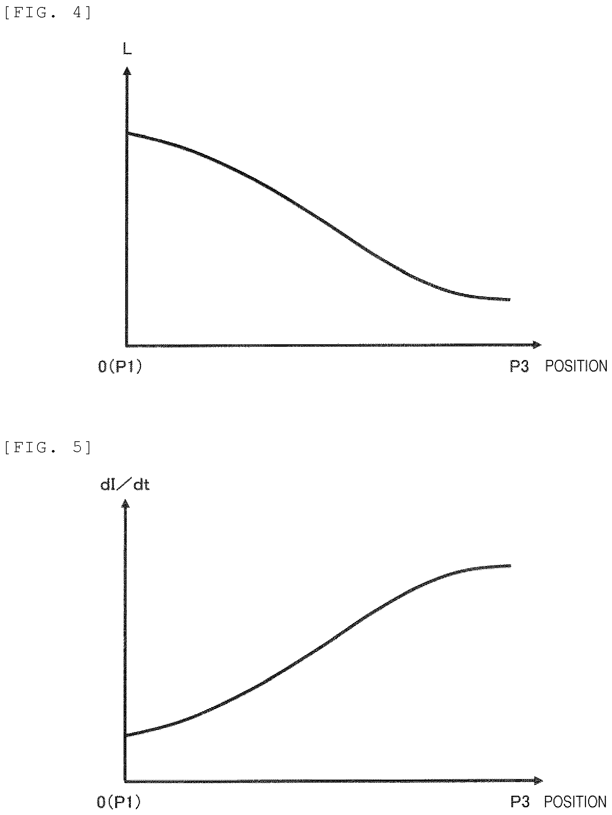

Here, the specimen position estimation unit 62 will be described with reference to Fig. 4. Fig. 4 is a diagram illustrating inductance characteristics with respect to the position of the coil 25 used in the specimen transportation device 1. The inductance characteristics are provided as an inductance characteristic table in the specimen transportation device 1.

The specimen position estimation unit 62 receives the current change amount (dI/dt, that is, equivalent to the inductance L of the coil 25) as described above and outputs the position estimation value of the transportation container 20 (that is, the specimen). For example, the inductance characteristic table with respect to the specimen position as shown in Fig. 4 is set in the specimen position estimation unit 62.

In Fig. 4, P3 means that the permanent magnet 10 is directly above any coil 25 and P1 means that the permanent magnet 10 is away from the coil 25 concerned and is on another coil 25 which is disposed adjacently. The vertical axis L in Fig. 4 indicates the inductance of the coil 25. Looking at the characteristics, the inductance L increases as the permanent magnet 10 changes from P3 to P1. As described above, the characteristics are the change in inductance caused by the action of the magnetic flux generated by energizing the coil 25 and the action of the magnetic flux generated by the permanent magnet 10.

Alternative characteristics of the inductance characteristics used in an actual control logic will be described with reference to Fig. 5. Fig. 5 is a diagram illustrating current change amount characteristics with respect to the position of the coil 25.

In the present embodiment, although the principle is to estimate the position of the transportation container 20 using positional characteristics of the inductance L, since the current change amount of the coil 25 is used as an input in the actual control logic, it can be set as a position characteristic data table of the current change amount (dI/dt) as shown in FIG. 5, in the detection position estimation unit 62. The relationship between the inductance L and the current change amount (dI/dt) is as shown in Equation (3).

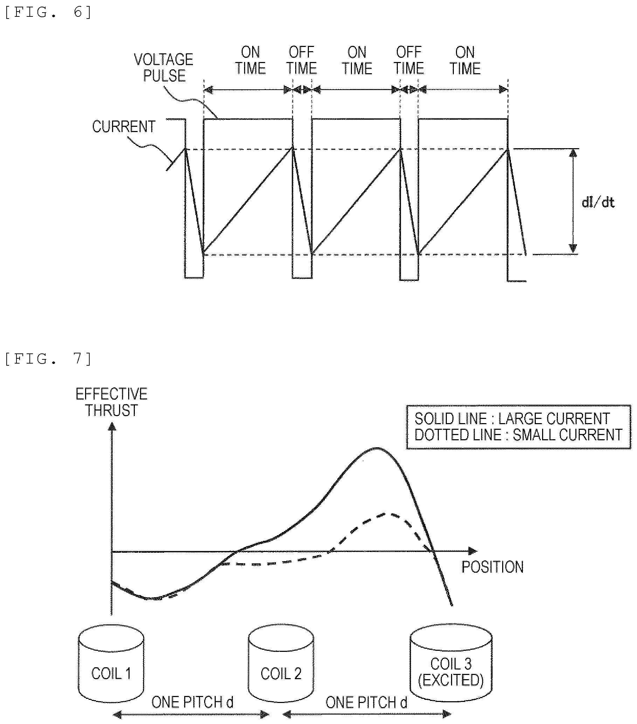

With reference to Fig. 6, a current waveform corresponding to a voltage waveform applied to the coil 25 for detecting the position of the transportation container 20 in the specimen transportation device 1 will be described. Fig. 6 is a diagram illustrating time-series waveforms of voltage pulses and currents of the specimen transportation device 1.

Fig. 6 illustrates the current value with respect to the voltage pulse, and the current change amount (dI/dt) is computed from a difference between the current value (maximum value) at the timing when the voltage pulse ON ends and the current value (minimum value) at the timing when the voltage pulse OFF ends. The sample position estimation unit 62 estimates the specimen position (position of transportation container 20) at any time by sequentially computing the current change amount (dI/dt).

Subsequently, the liquid shaking determination unit 65 shown in Fig. 3 will be described. The liquid shaking determination unit 65 determines liquid shaking of the specimen from the velocity fluctuation of the specimen. The liquid shaking determination unit 65 determines the liquid shaking and outputs a thrust (current) command that sufficiently prevents the liquid shaking to the duty setting unit 60, and then outputs switching position of the current applying coil, that is, the target switching position that determines when the current applying coil is switched at which position the specimen is, to the coil switching position computation unit 64. Here, to control the stopping position of the specimen with high precision, the command current and the target switching position are each set in two stages.

The characteristics of the effective thrust with respect to the specimen position will be described with reference to Fig. 7. Fig. 7 is a diagram illustrating position versus effective thrust for each current of the specimen transportation device 1.

Effective thrust Feff is represented by Equation (4).

$$\mathrm{Feff \; = \; Fx \; - \; \mu(mg \; + \; Fz) \quad (4)}$$

Here, Fx is force which acts in the horizontal direction with respect to the transportation surface P and is generated in the coil 25, Fz is force which acts in the direction perpendicular to the transportation surface P and is generated in the coil 25, m is specimen mass, and $\mu$ is friction coefficient.

The characteristics of Fig. 7 show the characteristics when current is applied (excited) to a coil 3. d in Fig. 7 indicates an inter-coil distance. When the specimen is located at coil 1, that is, at a distance of 2 pitches 2d, Fx hardly acts, and force acts in the direction of decelerating the specimen by the frictional force of its own weight component and Fz.

When the specimen is located at a coil 2, that is, at a distance of one pitch (d), force acts in the direction of accelerating the specimen due to an increase in Fx. Next, as the specimen approaches the coil 3, the acceleration force gradually increases, and depending on the characteristics of the coil, the effective thrust becomes maximum when the specimen comes near a midpoint between the coils 2 and 3. Then, the effective thrust decreases as the specimen approaches more. When the specimen approaches to reach nearly directly above the coil 3, since the detent force of the coil 3 acts to increase Fz, force acts in the direction of decelerating the specimen. Since Fx and Fz shown in Equation (4) increase with the current amount, the effective thrust also increases as the current amount increases.

Here, the first current is current applied mainly from immediately after an excitation coil is switched from the coil 2 to the coil 3 until reaching a predetermined position with respect to the stopping position (the coil 3 in Fig. 7), and the second current is current applied from when the specimen approaches a predetermined position with respect to the stopping position until the specimen stops. The first current is current that is applied to stop the specimen at the stopping position with high precision while preventing liquid shaking, and thus small current corresponding to the dotted line in Fig. 7 is applied to the coil 3.

On the other hand, the second current is current for overcoming the decelerating force by the detent force and stopping the specimen at a stop target, and thus large current corresponding to the solid line in Fig. 7 is applied to the coil 3.

As described above, in the present embodiment, the computation unit (control unit) 40 sets, near the stopping coil that is nearest to the stopping position of the specimen, a first section on a side separated from the stopping coil and a second section on a side nearer to the stopping coil than the first section, and sets the first current as current that energizes the stopping coil when the specimen is in the first section and the second current as current that energizes the stopping coil when the specimen is in the second section. In the present embodiment, the stopping coil closest to the stopping position of the specimen is the coil 3, and the second section includes the stopping position and is set continuously from the first section.

The first current is set, based on determination information of the liquid shaking determination unit 65, to a magnitude with which the liquid shaking of the specimen is controlled, and the second current is set to a current value larger than that of the first current.

The first current and the second current are generated according to the duty ratio of voltage pulse set by the duty setting unit 60.

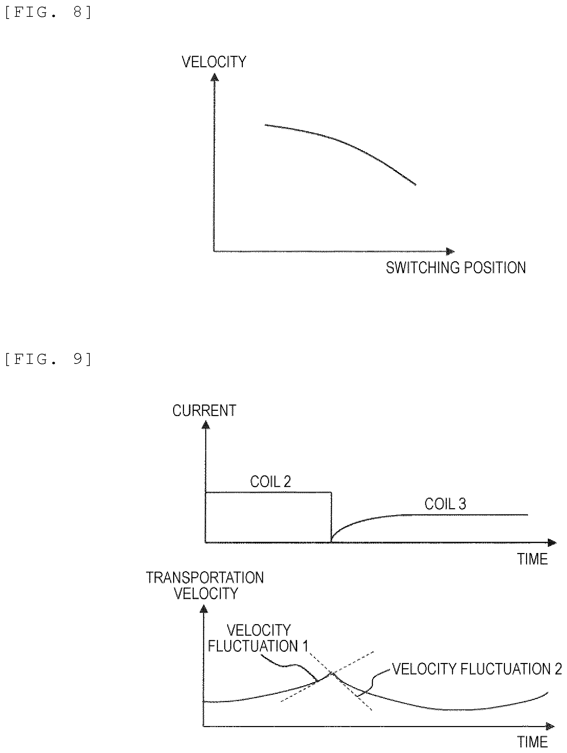

Next, referring to Fig. 8, the switching position of the excitation coil will be described. Fig. 8 is a diagram for describing the influence of the switching position of the excitation coil of the specimen transportation device 1 on the specimen transportation velocity.

In Fig. 8, the horizontal axis indicates the switching position of the coil to which the current is applied, and the vertical axis indicates the velocity when the specimen reaches the same switching position after the excitation coil is switched. The switching position here represents the distance between the specimen and the excitation coil immediately before the coil to which the current is applied is switched.

When the switching position is large, that is, when the excitation coil is switched when the distance between the excitation coil and the specimen is separated, the excitation coil is switched in a region where the effective thrust is greatly accelerated (near the middle between the coil 2 and the coil 3 in Fig. 7). When the excitation coil is switched, the distance between the specimen and the excitation coil is further increased by one pitch, and thus the switching works in the direction of decelerating the specimen.

On the other hand, when the switching position is small, that is, when the excitation coil is switched when the distance between the excitation coil and the specimen is short, the excitation coil is switched with sufficient acceleration in a region where the effective thrust is greatly accelerated. Although it is common to increase a distance to the excitation coil by one pitch by switching the excitation coil, since the excitation coil is switched when the specimen is approaching, the distance to the excitation coil becomes relatively close, and the force acting in the decelerating direction becomes smaller accordingly.

Here, to control the stopping position with high precision, which is the object of the present invention, it is necessary to sufficiently decelerate the transportation container 20, and thus the switching position needs to be increased.

Subsequently, Fig. 9 illustrates the velocity fluctuation waveform when the coil to which the current is applied is switched. Since the stop target is the coil 3 shown in Fig. 7, current smaller than that of the coil 2 is applied to the coil 3 to decelerate. When the coil to which the current is applied is switched from the coil 2 to the coil 3, since the distance between the specimen and the coil 3 at the moment of switching is one pitch apart, the effective thrust decreases, and the transportation acceleration of the specimen also decreases. To control specimen transportation by velocity, velocity fluctuation 1 and velocity fluctuation 2 are defined as velocity gradients before and after switching of the current applying coil. A correlation exists between the maximum value of velocity fluctuation 1 and velocity fluctuation 2 and the amount of liquid shaking during transportation, and the correlation is used for liquid shaking determination of the liquid shaking determination unit 65. For example, the difference between the velocity fluctuation 1 (positive value) and the velocity fluctuation 2 (negative value) may be used, instead of being limited to the maximum value.

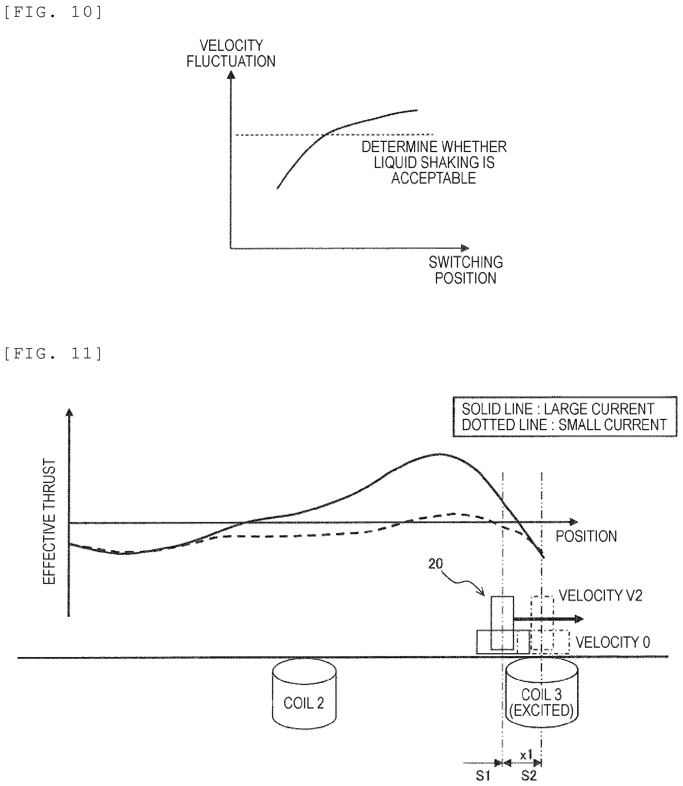

Subsequently, the switching position on the horizontal axis and the velocity fluctuation on the vertical axis are illustrated in Fig. 10. The correlation between the switching position and the velocity fluctuation shown in Fig. 10 shows the opposite characteristics of the correlation between the switching position and the velocity shown in Fig. 8. When the velocity after switching is large, the fluctuation of the effective thrust is small, and liquid shaking is less likely to occur. That is, since there is a trade-off between the distance of the switching position and the shaking of the liquid, to control the switching position so as to sufficiently decelerate the specimen velocity while preventing the liquid shaking, the liquid shaking determination unit 65 determines whether the liquid shaking is acceptable. Here, for example, the liquid shaking amount when the switching position is actually changed, which is obtained by acquiring data from a camera or the like, may be used as an acceptance or rejection determination value of liquid shaking. While clearing the acceptance or rejection determination of liquid shaking, control is made to the switching position where the specimen velocity can be decelerated as much as possible. As described above, the liquid shaking determination unit 65 determines liquid shaking by using the effective thrust characteristics of the coil 25.

Next, a control method when switching from the first current to the second current will be described with reference to Fig. 11. Fig. 11 is an explanatory diagram of the transportation velocity of the specimen transportation device 1 at the application timing of the second current.

Fig. 11 illustrates the position versus effective thrust characteristics and the positional relationship between the coil and the specimen (transportation container 20).

When the specimen velocity immediately before switching to the second current is $v_2$ and the distance between the coil 3 and the specimen at that time is x1, the following relationship is established from a relational expression between kinetic energy and works to stop the specimen directly above the coil 3, that is, to set the velocity to 0.

$$0 - (1/2)mv_2{}^2 = Feff \cdot x1 \quad (5)$$

Using Equation (5), the switching position is determined from velocity information of the specimen and the effective thrust. As for the switching position, it is determined based on the determination of whether liquid shaking is acceptable, same as when the first current is applied. The specimen velocity can be obtained by, for example, differentiating the positional information input from the specimen position estimation unit 62. Basically, the premise is that the transportation velocity is sufficiently decelerated in a section where the first current is applied, for example, when the friction coefficient becomes smaller than expected due to deterioration of the transportation surface P, the frictional force decreases, and the effective thrust increases, it is conceivable that the transportation velocity of the specimen will be faster than expected. Therefore, the target thrust is sequentially computed from the position and velocity information of the specimen, and the stopping position accuracy is ensured by performing processing for reducing the current value when the transportation velocity becomes faster than expected.

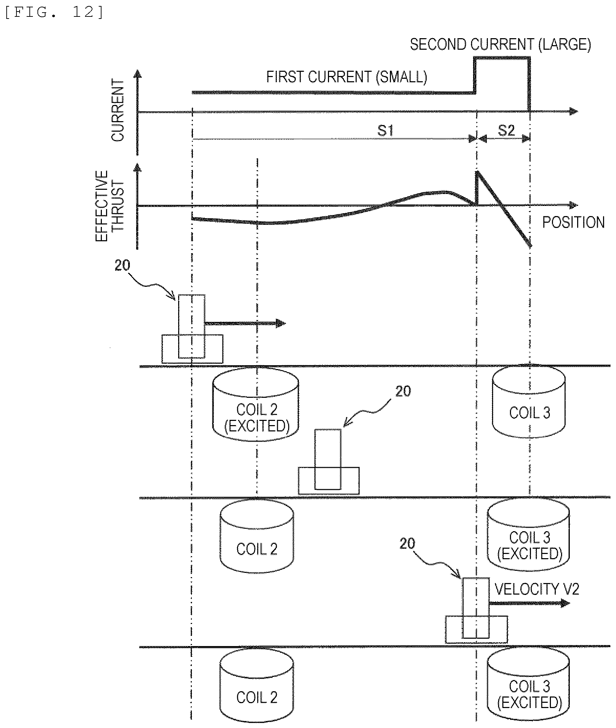

Fig. 12 is an explanatory diagram of the effective thrust of the specimen transportation device 1 and the specimen operation when the first current/second current are applied.

In the section of the first current, the excitation coil is switched at the switching position where the deceleration force can be obtained without causing liquid shaking. When the specimen sufficiently approaches the stopping position (the coil 3), the position for switching from the first current to the second current is determined based on the correlation between kinetic energy and work. The first current is small current with respect to the second current, and the second current is large current with respect to the first current.

As described above, in the present embodiment, in the specimen transportation device 1 that includes the transportation container 20 including the magnet 10 or a magnetic substance and the holding unit 20a that holds the specimen, the plurality of coils 25 that transport the transportation container 20, the coil drive unit 50 that applies voltage to the plurality of coils 25, and the control unit 40 that controls the coil drive unit 50,

the control unit 40 includes the liquid shaking determination unit 65 that determines liquid shaking of the specimen from a velocity fluctuation of the specimen, and the control unit 40 sets, near the stopping coil 3 that is nearest to the stopping position of the specimen, a first section S1 on a side separated from the stopping coil 3 and a second section S2 on a side nearer to the stopping coil 3 than the first section S1 and sets the first current as current that energizes the stopping coil 3 when the specimen is in the first section S1 and the second current as current that energizes the stopping coil 3 when the specimen is in the second section S2,
the first current is set, based on determination information of the liquid shaking determination unit 65, to a magnitude with which the liquid shaking of the specimen is controlled, and
the second current is set to a current value larger than that of the first current.

Here, it is preferable that the first current is set to a magnitude such that the liquid shaking of the specimen is prevented to predetermined liquid shaking used for the determination of whether liquid shaking is acceptable in Fig. 10.

As described above, in the present embodiment, the first current is applied to the stopping coil closest to the stopping position of the specimen at the timing when liquid shaking does not occur and the transportation velocity is expected to decrease. The second current is applied to the stopping coil closest to the stopping position of the specimen at the timing when kinetic energy and work of the specimen are balanced. In other words, the computation unit (control unit) 40 feeds the first current to the stopping coil closest to the stopping position of the sample at the timing when liquid shaking does not occur and the transportation velocity is expected to decrease. The computation unit (control unit) 40 feeds the second current to the stopping coil closest to the stopping position of the specimen at the timing when kinetic energy and work of the specimen are balanced.

With the configuration as described above, the specimen stopping position can be controlled with high precision while preventing liquid shaking during transportation of the specimen.

The present invention is not limited to the embodiments described above, and includes various modifications.

For example, the embodiments described above are detailed descriptions for easy understanding of the present invention, and are not necessarily limited to those including all the configurations. For a part of the configuration of the embodiment, other configurations can be added thereto, deleted therefrom, and replaced therewith.

Reference Signs List

1: specimen transportation device
3: stopping coil
10: permanent magnet
20: transportation container
20a: holding unit
25: coil
40: computation unit (control unit)
50: drive circuit (coil drive unit)
65: liquid shaking determination unit
S1: first section
S2: second section

**Claims**

1. A specimen transportation device comprising:

    a transportation container (20) that includes a magnet (10) or a magnetic substance and a holding unit (20a) adapted to hold a specimen;
    a plurality of coils (21a, 21b; 25; 25a, 25b) adapted to transport the transportation container;
    a coil drive unit (50) adapted to apply voltage to the plurality of coils; and
    a control unit (40) adapted to control the coil drive unit, to set, near a stopping coil that is nearest to a stopping position of the specimen, a first section on a side separated from the stopping coil and a second section on a side nearer to the stopping coil than the first section and to set a first current as current that energizes the stopping coil when the specimen is in the first section and a second current as current that energizes the stopping coil when the specimen is in the second section,
    **characterized in that**
    the control unit includes a liquid shaking determination unit (65) adapted to determine liquid shaking of the specimen from a velocity fluctuation of the specimen, wherein
    the control unit is adapted to set the first current, based on determination information of the liquid shaking determination unit, to a magnitude with which the liquid shaking of the specimen is controlled, and
    the control unit is adapted to set the second current to a current value larger than that of the first current.

2. The specimen transportation device according to claim 1, wherein
   the liquid shaking determination unit (65) is adapted to determine liquid shaking using effective thrust characteristics of the coils (25).

3. The specimen transportation device according to claim 1, wherein
   the control unit (40) is adapted to energize the first current to the stopping coil (3) at a timing when liquid shaking does not occur and a transportation velocity is expected to decrease.

4. The specimen transportation device according to claim 1, wherein
   the control unit (40) is adapted to energize the second current to the stopping coil (3) at a timing when kinetic energy and work of the specimen are balanced.

**Patentansprüche**

1. Probentransportvorrichtung, umfassend:

einen Transportbehälter (20), der einen Magneten (10) oder eine magnetische Substanz und eine Halteeinheit (20a), die dazu ausgelegt ist, eine Probe zu halten, umfasst;

mehrere Spulen (21a, 21b; 25; 25a, 25b), die dazu ausgelegt, den Transportbehälters zu transportieren;

eine Spulenantriebseinheit (50), die dazu ausgelegt ist, eine Spannung an die mehreren Spulen anzulegen; und

eine Steuereinheit (40), die dazu ausgelegt ist, die Spulenantriebseinheit zu steuern, um in der Nähe einer Stoppspule, die sich am nächsten zu einer Stoppposition der Probe befindet, einen ersten Abschnitt auf einer von der Stoppspule getrennte Seite und einen zweiten Abschnitt auf einer Seite, die sich näher an der Stoppspule als der erste Abschnitt befindet, festzulegen und einen ersten Strom als Strom festzulegen, der die Stoppspule mit Energie versorgt, wenn sich die Probe im ersten Abschnitt befindet, und einen zweiten Strom als Strom festzulegen, der die Stoppspule mit Energie versorgt, wenn sich die Probe im zweiten Abschnitt befindet,

**gekennzeichnet dadurch, dass**

die Steuereinheit eine Flüssigkeitsschüttelbestimmungseinheit (65) umfasst, die dazu ausgelegt ist, ein Schütteln der Flüssigkeit der Probe anhand einer Geschwindigkeitsschwankung der Probe zu bestimmen, wobei die Steuereinheit dazu ausgelegt ist, den ersten Strom basierend auf Bestimmungsinformationen der Flüssigkeitsschüttelbestimmungseinheit auf eine Größe festzulegen, mit der das Flüssigkeitsschütteln der Probe gesteuert wird, und

die Steuereinheit dazu ausgelegt ist, den zweiten Strom auf einen Stromwert festzulegen, der größer ist als der des ersten Stroms.

2. Probentransportvorrichtung nach Anspruch 1, wobei
die Flüssigkeitsschüttelbestimmungseinheit (65) dazu ausgelegt ist, das Flüssigkeitsschütteln unter Verwendung von effektiven Schubcharakteristiken der Spulen (25) zu bestimmen.

3. Probentransportvorrichtung nach Anspruch 1, wobei
die Steuereinheit (40) dazu ausgelegt ist, die Stoppspule (3) mit dem ersten Strom zu einem Zeitpunkt mit Energie zu versorgen, zu dem kein Flüssigkeitsschütteln auftritt und eine Transportgeschwindigkeit voraussichtlich abnimmt.

4. Probentransportvorrichtung nach Anspruch 1, wobei die Steuereinheit (40) dazu ausgelegt ist, die Stoppspule (3) mit dem zweiten Strom zu einem Zeitpunkt mit Energie zu versorgen, zu dem kinetische Energie und Arbeit der Probe ausgeglichen sind.

## Revendications

1. Dispositif de transport d'échantillons comprenant :

un récipient (20) de transport qui inclut un aimant (10) ou une substance magnétique et une unité (20a) de maintien adaptée à contenir un échantillon ;

une pluralité de bobines (21a, 21b ; 25 ; 25a, 25b) adaptées à transporter le récipient de transport ;

une unité (50) d'entraînement de bobines adaptée à appliquer une tension à la pluralité de bobines ; et

une unité (40) de commande adaptée à commander l'unité d'entraînement de bobines, à définir, à côté d'une bobine d'arrêt qui est la plus proche d'une position d'arrêt de l'échantillon, une première section sur un côté séparé de la bobine d'arrêt et une deuxième section sur un côté plus près de la bobine d'arrêt que la première section et à définir un premier courant comme courant qui alimente la bobine d'arrêt lorsque l'échantillon est dans la première section et un deuxième courant comme courant qui alimente la bobine d'arrêt lorsque l'échantillon est dans la deuxième section,

**caractérisé en ce que**

l'unité de commande inclut une unité (65) de détermination d'agitation de liquide adaptée à déterminer une agitation de liquide de l'échantillon à partir d'une fluctuation de vitesse de l'échantillon, dans lequel

l'unité de commande est adaptée à définir le premier courant, sur la base d'une information de détermination de l'unité de détermination d'agitation de liquide, à une grandeur avec laquelle l'agitation de liquide de l'échantillon est commandée, et

l'unité de commande est adaptée à définir le deuxième courant à une valeur de courant plus grande que celle du premier courant.

2. Dispositif de transport d'échantillons selon la revendication 1, dans lequel
l'unité (65) de détermination d'agitation de liquide est adaptée à déterminer une agitation de liquide en utilisant des caractéristiques effectives de poussée des bobines (25).

**EP 4 269 296 B1**

3. Dispositif de transport d'échantillons selon la revendication 1, dans lequel
l'unité (40) de commande est adaptée à alimenter le premier courant vers la bobine (3) d'arrêt à un moment où une agitation de liquide ne se produit pas et une vitesse de transport est attendue à diminuer.

4. Dispositif de transport d'échantillons selon la revendication 1, dans lequel
l'unité (40) de commande est adaptée à alimenter le deuxième courant vers la bobine (3) d'arrêt à un moment où une énergie cinétique et un travail de l'échantillon sont équilibrés.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

VELOCITY
FLUCTUATION

DETERMINE WHETHER
LIQUID SHAKING IS
ACCEPTABLE

SWITCHING
POSITION

[FIG. 11]

SOLID LINE : LARGE CURRENT
DOTTED LINE : SMALL CURRENT

EFFECTIVE THRUST

POSITION

20

VELOCITY V2

VELOCITY 0

COIL 2

COIL 3
(EXCITED)

x1

S1    S2

[FIG. 12]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017227635 A
- JP 2017077971 A
- JP 2020142913 A